# EUROPEAN PATENT SPECIFICATION

(11) **EP 2 596 159 B1**
(45) Date of publication and mention of the grant of the patent: **25.06.2025**
(21) Application number: 11738691.2
(22) Date of filing: 22.07.2011
(51) Int. Cl.: D04H 1/64, C08J 5/24, C09J 103/02

(54) **USE OF A BONDED MINERAL FIBRE PRODUCT FOR IMPROVING FIRE AND PUNKING RESISTANCE**
VERWENDUNG EINES GEBUNDENEN MINERALFASERPRODUKTS ZUR VERBESSERUNG DER FEUER- UND SELBSTERWÄRMUNGSBESTÄNDIGKEIT
UTILISATION D'UN PRODUIT EN FIBRES MINÉRALES COLLÉES POUR AMÉLIORER LA RÉSISTANCE AU FEU ET À L'AUTO-ÉCHAUFFEMENT.

(30) Priority: 07.09.2010 US 380562 P; 23.07.2010 EP 10170664
(43) Date of publication of application: 29.05.2013
(60) Divisional application: 25176054.2
(73) Proprietor: ROCKWOOL A/S, 2640 Hedehusene (DK)
(72) Inventor: NAERUM, Lars, DK-2900 Hellerup (DK); NISSEN, Povl, DK-3650 Olstykke (DK)
(74) Representative: Meissner Bolte Partnerschaft mbB
(86) International application number: PCT/EP2011/062643
(87) International publication number: WO 2012/010694

(56) References cited:
- EP-A1- 1 170 265
- EP-A1- 1 382 642
- EP-A1- 2 230 222
- WO-A1-2008/089850
- WO-A1-2009/019232
- WO-A2-2007/014236
- US-A1- 2005 215 153
- US-A1- 2010 129 593

## Description

### Field of the Invention

The present invention relates to the use of a binder composition for improving the fire resistance and anti-punk properties in accordance with Class A1 of Standard EN 13501-1of a bonded mineral fibre product.

### Background of the Invention

Mineral fibre products generally comprise man-made vitreous fibres (MMVF) such as, e.g., glass fibres, ceramic fibres, basalt fibres, slag wool, mineral wool and stone wool, which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process. The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

For the production of high-density mineral fibre products, e.g., walkable roofing boards for flat roofs, the binder-loaded mats are compressed, optionally after having been pleated to a multi-layer composite, and cured in a curing oven.

In the past, the binder resins of choice have been phenol-formaldehyde resins which can be economically produced and can be extended with urea prior to use as a binder. However, the existing and proposed legislation directed to the lowering or elimination of formaldehyde emissions have led to the development of formaldehyde-free binders such as, for instance, the binder compositions based on polycarboxy polymers and polyols or polyamines, such as disclosed in EP-A-583086, EP-A-990727, EP-A-1741726, US-A-5,318,990 and US-A-2007/0173588.

Another group of non-phenol-formaldehyde binders are the addition/-elimination reaction products of aliphatic and/or aromatic anhydrides with alkanolamines, e.g., as disclosed in WO 99/36368, WO 01/05725, WO 01/96460, WO 02/06178, WO 2004/007615 and WO 2006/061249. These binder compositions are water soluble and exhibit excellent binding properties but may require expensive starting materials and, in particular, a high proportion of expensive anhydride reactants in order to achieve the desired water solubility, curing speed and curing density. Several of the above-mentioned patent publications therefore suggest the use of cheaper carbohydrates, for instance, starch or sugar, as additives, extenders or as reactive components of the binder system.

EP 2 230 222 A1 relates to an aqueous binder composition for mineral fibres comprises: (a) a sugar syrup containing a reducing sugar and having a dextrose equivalent DE of at least 50 and less than 85; (b) a polycarboxylic acid component; (c) an amine; and, optionally, (d) a reaction product of a polycarboxylic acid component (b) and an amine (c).

US 2005/215153 A1 relates to a polycarboxy binder composition that contains a dextrin as a co-binder is provided. The dextrin co-binder may be a dextrin, a modified dextrin, a maltodextrin, or combinations thereof. The dextrin may be chemically modified.

US 2010/129593 A1 relates to a novel binder system and its use for the consolidation of textile fabrics, and to products containing such consolidated textile fabrics

WO 2009/019232 A1 relates to a method of manufacturing a mineral fibre thermal insulation product comprises the sequential steps of: Forming mineral fibres from a molten mineral mixture; spraying a substantially formaldehyde free binder solution on to the mineral fibres, the binder solution comprising: a reducing sugar, an acid precursor derivable from an inorganic salt and a source of nitrogen; Collecting the mineral fibres to which the binder solution has been applied to form a batt of mineral fibres; and Curing the batt comprising the mineral fibres and the binder which is in contact with the mineral fibres by passing the batt through a curing oven so as to provide a batt of mineral fibres held together by a substantially water insoluble cured binder.

The use of carbohydrates in mineral wool binder systems is however often accompanied by impaired fire characteristics. For instance, during production of high-density mineral fibre products in production lines with reduced cooling zone capacity a phenomenon which has been described as punking may occur. Punking is a term of art used to denote the comparatively rapid flameless oxidation of the binder with a concomittant self-reinforcing generation of heat caused by an exothermic process initiated by hot spots (melt splashes or glowing coke pieces). Odors and fumes given off by such thermal decompositon are offensive, potentially hazardous and are capable of discoloring and staining adjacent materials. Furthermore, punking may be associated with exothermic reactions which increase temperatures through the thickness of the insulation causing a fusing or devitrification of the mineral fibres and eventually creating a fire hazard. In the worst case, punking causes fires in the stacked pallets stored in warehouses or during transportation.

A further disadvantage associated with the use of carbohydrates in mineral wool binder systems is the difficulty in obtaining highly fire resistant mineral wool products, in particular, bonded mineral fibre products that satisfy the requirements of Class A1 of Standard EN 13501-1.

### Summary of the Invention

An object of the present invention is to provide a use of a binder composition for improving the fire resistance and anti-punk properties in accordance with Class A1 of Standard EN 13501-1 of a bonded mineral fibre product.

Thus, a first aspect not according to the invention relates to a bonded mineral fibre product exhibiting high fire resistance in accordance with Class A1 of Standard EN 13501-1 as well as improved punking resistance comprises man-made vitreous fibres (MMVF) bound by a cured binder composition, the non-cured binder composition comprising
(a) a sugar component, and either
(b) a polycarboxylic acid component and an alkanolamine, or
(c) a reaction product of a polycarboxylic acid component and an alkanolamine, or
(d) a combination of (b) and (c),
the amount of sugar component (a) being within the range of 42 to 72 percent by weight, based on the total weight (dry matter) of the binder components.

In a further aspect not according to the invention relates to a method of producing a bonded mineral fibre product exhibiting high fire resistance in accordance with Class A1 of Standard EN 13501-1 as well as improved punking resistance, said method comprising the steps of:
contacting man-made vitreous fibres (MMVF) with an aqueous binder composition which comprises
   (a) a sugar component, and either
   (b) a polycarboxylic acid component and an alkanolamine, or
   (c) a reaction product of a polycarboxylic acid component and an alkanolamine, or
   (d) a combination of (b) and (c),
the binder composition comprising 42 to 72 percent by weight of sugar component (a), based on the total weight (dry matter) of the binder components,
and curing the binder composition to form a bonded mineral fibre product.

The present invention relates to the use of a binder composition for improving the fire resistance and anti-punk properties in accordance with Class A1 of Standard EN 13501-1 of a bonded mineral fibre product, said binder composition comprising:
(a) a sugar component, and either
(b) a polycarboxylic acid component and an alkanolamine, or
(c) a reaction product of a polycarboxylic acid component and an alkanolamine; or
(d) a combination of (b) and (c),
the binder composition comprising 42 to 72 percent by weight of sugar component (a), based on the total weight (dry matter) of the binder components.

### Detailed Description and Preferred Embodiments

The bonded mineral fibre product not in accordance with the present invention comprises man-made vitreous fibres (MMVF) bound by a cured binder composition, the non-cured binder composition comprising
(a) a sugar component, and either
(b) a polycarboxylic acid component and an alkanolamine, or
(c) a reaction product of a polycarboxylic acid component and an alkanolamine, or
(d) a combination of (b) and (c),
the amount of sugar component (a) being within the range of 42 to 72 percent by weight, based on the total weight (dry matter) of the binder components.

### Sugar component (a)

The sugar component (a) employed in accordance with the present invention is preferably selected from sucrose and reducing sugars or mixtures thereof.

A reducing sugar is any sugar that, in solution, has an aldehyde or a ketone group which allows the sugar to act as a reducing agent. In accordance with the present invention, reducing sugars may be used as such or as a carbohydrate compound that yields one or more reducing sugars in situ under thermal curing conditions. The sugar or carbohydrate compound may be a monosaccharide in its aldose or ketose form, a disaccharide, a triose, a tetrose, a pentose, a hexose, or a heptose; or a di-, oligo- or polysaccharide; or combinations thereof. Specific examples are glucose (= dextrose), starch hydrolysates such as corn syrup, arabinose, xylose, ribose, galactose, mannose, fructose, maltose, lactose and invert sugar. Compounds such as sorbitol and mannitol, on the other hand, which do not contain or supply aldehyde or ketone groups, are less effective in the instant invention.

Crystalline dextrose is normally produced by subjecting an aqueous slurry of starch to hydrolysis by means of heat, acid or enzymes. Depending on the reaction conditions employed in the hydrolysis of starch, a variety of mixtures of glucose and intermediates is obtained which may be characterized by their DE number. DE is an abbreviation for Dextrose Equivalent and is defined as the content of reducing sugars, expressed as the number of grams of anhydrous D-glucose per 100 g of the dry matter in the sample, when determined by the method specified in International Standard ISO 5377-1981 (E). This method measures reducing end groups and attaches a DE of 100 to pure glucose (= dextrose) and a DE of 0 to pure starch.

Only glucose syrup of high DE can crystallise easily and yield a product in powder or granular form. A most popular crystallised product is dextrose monohydrate with application in medicine and chewing tablets. Dextrose monohydrate is pure glucose (DE 100).

With lower DE numbers, the syrup gradually loses its tendency to crystallise. Below approx. 45 DE, the syrup can be concentrated into a stable, non-crystallising liquid, for instance, Standard 42 DE syrup which finds wide spread use in canned fruit preserves, ice cream, bakery products, jam, candy, and all kinds of confectionery.

A preferred sugar component for the use in the present invention is a reducing sugar having a dextrose equivalent DE of 40 to 100, preferably 50 to 100, more preferably 86 to 100, and most preferably 90 to 100, measured according to ISO 5377-1981 (E). Particularly preferred reducing sugar components are dextrose, high DE glucose syrup, high-fructose syrup and mixtures thereof.

The requirements of a binder system suitable for binding a mineral fibre product so as to provide an adequate product and process for making such a product are many and varied in terms of physical parameters, some of which are explained below.

The viscosity and the content of large polymers in a sugar syrup generally may decrease with an increasing DE value. A large content of polymers should preferably be avoided for a mineral wool binder because this will provide a more sticky binder resulting in stickiness of the formed mineral wool mat or binder-containing web to the manufacturing equipment such as e.g. the forming chamber walls, the travelling conveyors, rollers and pendulums.

The solubility of the binder solution containing a sugar syrup may increase with increasing DE value. The binder solution must be sufficiently water soluble to provide a homogenous distribution of the binder on the mineral fibres making up the mineral wool mat or web to be cured.

On the other hand, a sugar syrup will generally result in a browning which is more pronounced with increasing DE value, thus leading to unwanted aesthetical appearance for a mineral wool product containing a binder system with sugar syrups, at least for some applications of the mineral wool product. Sugar syrups with too high DE will also have a tendency to add to the boiling point elevation effect of the binder compared to low DE sugar syrups. The binder composition for a mineral wool web should preferably not have too high a boiling point since this will lead to an increase in curing time and thus result in higher curing temperatures and/or a physically longer curing oven length to provide a longer curing time.

The aqueous binder composition containing a sugar component will lower the water activity when increasing the DE value for the sugar syrup, and one of the effects of a low water activity may be that the binder is susceptible to moisture migration. This may create an unwanted uptake of moisture in the binder droplets in the uncured mineral wool web.

For commercial and practical reasons (availability), dextrose and sucrose are the most preferred sugar components in the present invention. However, other sugar components such as those described below are also suited for the purposes of the present invention.

### Crude hydrolysate from starch-based glucose refining and treated crude hydrolysate from starch-based glucose refining

An example of a typical commercial process involving acidic hydrolysis comprises adding an acid such as hydrochloric acid to a water slurry of starch (purified starch milk) in order to acidify it before cooking. The acidified slurry is then heated to the desired liquefaction temperature and kept at that temperature until the required degree of hydrolysis has been obtained. The combination of reaction time, temperature and concentration of acid controls the degree of hydrolysis. After neutralisation of the acid, the crude hydrolysate may be filtered and refined by means of activated carbon and/or ion exchange in order to remove impurities, discoloration and by-products formed during the hydrolysis and to give a so-called treated crude hydrolysate. Depending on raw material and end product requirements, various filtration steps, active carbon treatment steps and ion exchange steps for deionisation etc. may be added to the process. Any sequence of refining steps may be employed, for instance, (1) filtration / ion exchange/ carbon treatment; (2) filtration / carbon treatment / ion exchange; and for very high quality (3) filtration / carbon treatment / ion exchange / carbon treatment.

Treatment of the crude hydrolysate may lead to a sugar syrup such as a high DE corn syrup (a high DE glucose syrup) having a DE of from 55 to 70.

In certain instances, however, for instance, if the further reaction of the sugar component (a) requires an additional nitrogen source as a reactant, it may be preferable to employ the sugar syrup (a) without any prior removal of proteins and/or oils through refining. For instance, in a specific embodiment only ions (salts) are removed from the crude hydrolysate by ion exchange using cationic and/or anionic resins resulting in an embodiment of a treated crude hydrolysate from the starch-based glucose refining.

Hydrolysis with acid catalysts allows the manufacture of intermediate conversion products ranging from 35-55 DE. Intermediate and higher conversion products with DE from 28 up to 98 can be made by substituting acid with enzymes. This is typically done in a two-step process. For the first step (liquefaction), thermo-stable α-amylase, or acid is used. After cooling and pH adjustment, a saccharification enzyme such as amyloglucosidase is employed. Except for a different holding time, pH and temperature, the processes are in principle the same, regardless of the catalyst. However, enzymes and acid break down the starch differently, resulting in different sugar composition of identical DE.

High fructose syrups are produced from refined high DE dextrose syrups in an enzymatic process using isomerase immobilised on a resin which enzymatically converts glucose to fructose. These syrups are conventionally referred to as HFSS and are also suitable sugar components which may, for instance, be provided with a DE around 55.

### Molasses

In another specific embodiment of the present invention, molasses is employed as a carbohydrate compound that yields one or more reducing sugars upon treatment with acids such as, e.g., sulphuric acid.

The term "molasses" as used herein generically embraces many types of molasses with varied sugar content and sugar type and other constituents making up the molasses. Sugar cane and beet molasses products are by far the most common types. Molasses have a typical total solids content of 60-80% by weight.

In order to improve the fire resistance and anti-punk properties in accordance with Class A1 of Standard EN 13501-1 of a bonded mineral fibre product , the sugar component (a) must be employed in critical proportions. Generally, the non-cured binder composition comprises 42 to 72 percent by weight, preferably 45 to 70 percent by weight, for instance, 48 to 68 percent by weight, and more preferably 50 to 65 percent by weight of sugar component (a), based on the total weight (dry matter) of the binder components.

### Polycarboxylic acid component

The polycarboxylic acid component is generally selected from dicarboxylic, tricarboxylic, tetracarboxylic, pentacarboxylic, and like polycarboxylic acids, and anhydrides, salts and combinations thereof.

Preferred polycarboxyl acid components employed as starting materials for reacting with the other binder components are carboxylic anhydrides. The carboxylic anhydride starting material may be selected from saturated or unsaturated aliphatic and cycloaliphatic anhydrides, aromatic anhydrides and mixtures thereof, saturated or unsaturated cycloaliphatic anhydrides, aromatic anhydrides and mixtures thereof being preferred. In a particularly preferred embodiment of the invention, two different anhydrides selected from cycloaliphatic and/or aromatic anhydrides are employed. These different anhydrides are preferably reacted in sequence.

Specific examples of suitable aliphatic carboxylic anhydrides are succinic anhydride, maleic anhydride and glutaric anhydride. Specific examples of suitable cycloaliphatic anhydrides are tetrahydrophthalic anhydride, hexahydrophthalic anhydride, methyltetrahydrophthalic anhydride and nadic anhydride, i.e. endo-cis-bicyclo[2.2.1]-5-heptene-2,3-dicarboxylic anhydride. Specific examples of suitable aromatic anhydrides are phthalic anhydride, methylphthalic anhydride, trimellitic anhydride and pyromellitic dianhydride.

In the above embodiment employing two different anhydrides, a combination of cycloaliphatic anhydride and aromatic anhydride is particularly preferred, e.g. a combination of tetrahydrophthalic anhydride (THPA) and trimellitic anhydride (TMA). The molar ratio of cycloaliphatic anhydride to aromatic anhydride is preferably within the range of from 0.1 to 10, more preferably within the range of from 0.5 to 3. Curing tests with the system THPA/TMA have surprisingly shown that a lower molar ratio of THPA to TMA results in a higher curing speed.

If appropriate, an additional polycarboxylic acid may be employed in the reaction and is preferably added to the reaction mixture before addition of the anhydride reactant. Specific examples of such additional polycarboxylic acids are adipic acid, aspartic acid, azelaic acid, butane tricarboxylic acid, butan tetracarboxylic acid, citraconic acid, citric acid, fumaric acid, glutaric acid, itaconic acid, maleic acid, malic acid, mesaconic acid, oxalic acid, sebacic acid, succinic acid, tartaric acid and trimesic acid.

### Alkanolamine

In the preparation of the binder compositionin accordance with the present invention, an alkanolamine is used. Preferred alkanolamines for use in the preparation of binder composition are alkanolamines having at least two hydroxy groups such as, for instance, alkanolamines represented by the formula 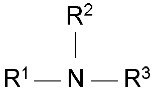 wherein R¹ is hydrogen, a C₁₋₁₀ alkyl group or a C₁₋₁₀ hydroxyalkyl group; and R² and R³ are C₁₋₁₀ hydroxyalkyl groups. Preferably, R² and R³, independently are C₂₋₅ hydroxyalkyl groups, and R¹ is hydrogen, a C₁₋₅ alkyl group or a C₂₋₅ hydroxyalkyl group. Particularly preferred hydroxyalkyl groups are ß-hydroxyalkyl groups.

Specific examples of suitable alkanolamines are monoethanolamine, diethanolamine, triethanolamine, diisopropanolamine, triisopropanolamine, methyldiethanolamine, ethyldiethanol-amine, n-butyldiethanolamine, methyldiisopropanolamine, ethylisopropanolamine, ethyldiisopropanolamine, 3-amino-1,2-propanediol, 2-amino-1,3-propanediol, aminoethylethanolamine and tris(hydroxymethyl)aminomethane. Diethanolamine is the currently preferred alkanolamine.

### Reaction product of polycarboxylic acid component and alkanolamine

In accordance with a specific embodiment of the present invention, the binder composition comprises a water-soluble reaction product of a polycarboxylic acid component and an alkanolamine. A particularly preferred embodiment of that type comprises using the water-soluble reaction product of at least one carboxylic anhydride and at least one alkanolamine.

The proportion of the alkanolamine and carboxylic anhydride reactants is preferably selected such that the ratio of equivalents of amine plus hydroxy groups (NH+OH) to equivalents of carboxy groups (COOH) is at least 0.4, more preferably at least 0.6.

On the other hand, the properties of the final binder composition, such as curing behaviour, durability and humidity resistance are determined by the total ratio of reactive groups present. Therefore, for optimum performance, the ratio of equivalents of amine plus hydroxy groups (NH+OH) to equivalents of carboxy groups (COOH) in the final binder composition is preferably adjusted to 2.0 or less, more preferably to 1.7 or less. In general, the final binder composition has an equivalent ratio of (NH+OH) / (COOH) within the range of from 1.25 to 1.55.

The reaction between the alkanolamine and carboxylic anhydride reactants is carried out in the usual manner, for instance, as described in WO 99/36368, WO 01/05725, WO 02/06178, WO 2004/007615 and WO 2006/061249.

The reaction temperature is generally within the range of from 50°C to 200°C. In a preferred embodiment and, in particular, when two different anhydrides are employed, the alkanolamine is first heated to a temperature of at least about 40°C, preferably at least about 60°C, whereafter the first anhydride is added and the reaction temperature is raised to at least about 70°C, preferably at least about 95°C and more preferably at least about 125°C, at which temperature the second anhydride is added to the reaction mixture when substantially all the first anhydride has dissolved and/or reacted. Increasing the reaction temperature from 70-95°C to 100-200°C allows a higher conversion of monomers to oligomers. In this case, a preferred temperature range is 105-170°C, more preferably 110-150°C.

If water is added after the first anhydride has reacted, either together with the second anhydride or before addition of the second anhydride or at the end of the reaction, in an amount to make the binder easily pumpable, a binder having an increased molecular weight (compared to water addition from the start) is obtained which still has a desired pumpability, viscosity, and water dilutability and contains less unreacted monomers.

In order to improve the water solubility and dilutability of the binder, a base may be added up to a pH of about 8, preferably a pH of between about 5-8, and more preferably a pH of about 6. Furthermore, the addition of a base will cause at least partial neutralization of unreacted acids and a concomittant reduction of corrosiveness. Normally, the base will be added in an amount sufficient to achieve the desired water solubility or dilutability. The base is preferably selected from volatile bases which will evaporate at or below curing temperature and hence will not influence curing. Specific examples of suitable bases are ammonia (NH₃) and organic amines such as diethanolamine (DEA) and triethanolamine (TEA). The base is preferably added to the reaction mixture after the reaction between the alkanol amine and the carboxylic anhydride has been actively stopped by adding water.

### Other Components of Binder Composition

The binder compositions in accordance with the present invention may additionally comprise one or more conventional binder additives. These include, for instance, curing accelerators such as, e.g., ß-hydroxyalkylamides; the free acid and salt forms of phosphoric acid, hypophosphorous acid and phosphonic acid. Other strong acids such as boric acid, sulphuric acid, nitric acid and p-toluenesulphonic acid may also be used, either alone or in combination with the just mentioned acids, in particular with phosphoric, hypophosphorous acid or phosphonic acid. Other suitable binder additives are silane coupling agents such as γ-aminopropyltriethoxysilane; thermal stabilizers; UV stabilizers; emulsifiers; surface active agents, particularly nonionic surfactants; biocides; plasticizers; anti-migration aids; coalescents; fillers and extenders such as starch, clay, silicates and magnesium hydroxide; pigments such as titanium dioxide; hydrophobizing agents such as fluorinated compounds, mineral oils and silicone oils; flame retardants; corrosion inhibitors such as thiourea; antifoaming agents; antioxidants; and others.

These binder additives and adjuvants may be used in conventional amounts generally not exceeding 20 wt.% of the binder solids. The amount of curing accelerator in the binder composition is generally between 0.05 and 5 wt.%, based on solids.

The final aqueous binder composition generally has a solids content of from 1 to 20 wt.% and a pH of 6 or greater.

### Mineral fibre product

The mineral fibres employed may be any of man-made vitreous fibres (MMVF), glass fibres, ceramic fibres, basalt fibres, slag fibres, rock fibres, stone fibres and others. These fibres may be present as a wool product, e.g. like a rock wool product. The fibres may have such chemical compositions that enable them to meet the fire classification A1 by virtue of their inherent characteristics when exposed to heat.

Suitable fibre formation methods and subsequent production steps for manufacturing the mineral fibre product are those conventional in the art. Generally, the binder is sprayed immediately after fibrillation of the mineral melt on to the airborne mineral fibres. The aqueous binder composition is normally applied in an amount of 0.1 to 10 %, preferably 0.2 to 8 % by weight, of the bonded mineral fibre product on a dry basis.

The spray-coated mineral fibre web is generally cured in a curing oven by means of a hot air stream. The hot air stream may be introduced into the mineral fibre web from below, or above or from alternating directions in distinctive zones in the length direction of the curing oven.

Typically, the curing oven is operated at a temperature of from about 150°C to about 350°C. Preferably, the curing temperature ranges from about 200 to about 300°C. Generally, the curing oven residence time is from 30 seconds to 20 minutes, depending on, for instance, the product density.

If desired, the mineral wool web may be subjected to a shaping process before curing. The bonded mineral fibre product emerging from the curing oven may be cut to a desired format e.g., in the form of a batt. Thus, the mineral fibre products produced may, for instance, have the form of mats, batts, slabs, sheets, plates, strips, rolls, granulates and other shaped articles. In accordance with the present invention, it is also possible to produce composite materials by combining the bonded mineral fibre product with suitable composite layers or laminate layers such as, e.g., metal, glass surfacing mats and other woven or non-woven materials.

The mineral fibre products in accordance with the present invention generally have a density within the range of from 10 to 250 kg/m³, preferably 20 to 200 kg/m³.

The organic content (OC) is generally within the range of from 0.25 to 14 kg/m³, preferably 1 to 10 kg/m³, more preferably 3 to 10 kg/m³.

The mineral fibre products generally have a loss on ignition (LOI) within the range of 0.3 to 7.0 %, preferably 0.5 to 6.0 %.

A particular group of mineral fibre products are low-density glass wool rolls which normally are susceptible to punking because of the extreme degree of compression in the packages.

Another particularly preferred mineral fibre product is a high-density roofing board for flat roofs. Such walkable roofing boards generally have a density within the range of from 80 to 300 kg/m³.

There are essentially two types of roofing boards for flat roof use: mono density and dual density roofing boards such as disclosed, e.g., in EP-A-889981 and EP-A-1456444.

In preferred dual density roofing boards, the mineral fibre batts include an upper layer having a density of 100 to 300 kg/m³, often around 120 to 250 kg/m³, and a lower layer with a density which is usually not more than 80% but usually more than 30% of the density of the upper layer, often around 40 to 70% of the density of the upper layer. Usually, the upper and lower layers in the final product have a thickness of 30 to 300 mm. The lower layer is usually 25 to 275 mm thick and is usually at least 75 mm thick. Generally, it is at least 50%, and often 75 to 95%, of the combined thickness of the upper and lower layers.

The bonded mineral fibre products are also suitable as insulating boards for flat roofs such as disclosed, e.g., in EP-A-1803862, which may be used for flat roof construction by placing them on steel sheet profiles.

The bonded mineral fibre products improved by the use in accordance with the present invention exhibit high fire resistance in accordance with Class A1 of Standard EN 13501-1 as well as improved anti-punk properties. The punking test method employed in the present invention comprises heating a metal cylinder of 30 mm diameter and 36 mm length to 900°C and placing it in the centre of a 300 x 300 x 300 mm mineral wool cube. The temperature in the mineral wool at a distance of 50, 75 and 100 mm from the centre as well as the temperature of the metal cylinder are measured. Punking is observed if one or more of the temperatures in the mineral wool at any time are higher than the temperature of the metal cylinder at the same time.

The following examples are intended to further illustrate the invention without limiting its scope. In this application, the solids content (dry matter) is determined at 200 °C, 1 hour and expressed as wt. %.

### Examples

### Preparation of binder component resin B1

158 g of diethanolamine (DEA) are placed in a 1-litre glass reactor provided with a stirrer and a heating/cooling jacket. The temperature of the diethanolamine is raised to 60°C whereafter 91 g of tetrahydrophthalic anhydride (THPA) are added. After raising the temperature and keeping it at 130°C, a second portion of 46 g of tetrahydrophthalic anhydride is added followed by 86 g of trimellitic anhydride (TMA). After reacting at 130°C for 1 hour, the mixture is cooled to 95°C and 210 g of water added and the mixture stirred for 1 hour. After cooling to ambient temperature, the obtained resin is ready for use.

The solids content of the binder was measured as 58 %.

Larger amounts of the binder component resin B1 were prepared for the binder compositions following the above procedure.

### Preparation of binder compositions

The binder compositions in Table 1 were made by mixing the components in the litre amounts stated in the table, resulting in the relative amount of solid weight of the components along with the stated percentage amounts. All percentages are given as wt.% dry matter.

All binders were mixed with a standard silane (gamma-aminopropyltriethoxysilane) in an amount of 1.4% of the total solids. Hypophosphorous acid was also added in an amount of 2% of the binder resin component B1. Finally, the binders were diluted with water to 15% to 20% solids and further diluted before use.

### Preparation of products

These binders were used in the test production of several types of mineral fibre products, namely Duorock and DP-GF (Dachplatte-Grossformat), both two-ply, dual-density products for flat roof insulation; A-Tagplade, a mono-ply product for flat roof insulation; and Klemmrock a flexible, low-density product for insulation between the rafters.

The binders were used by spraying the binder solutions through nozzles near a cascade rotor apparatus into the formed cloud of fibres in the forming chamber. The coated fibres were collected on transport conveyors and transferred into a curing oven for a curing time of 5-15 minutes at a curing temperature of 275°C.

The products shown in Table 1 were tested for fire classification and punking characteristics along with measuring the Loss on Ignition (LOI), organic content and density.

**Table 1**

| Example | Binder | B1 solid | B1 Litre | B1 Kg solids | Ammonia litre | Acid | Acid solid | Acid Litre | Acid Kg solids | Sugar solid | Sugar Litre | Sugar Kg solids | Product type | Thick ness mm | LOI % | Density kg/m3 | Organic content kg/m3 | Fire class | Punking |
|---|---|---|---|---|---|---|---|---|---|---|---|---|---|---|---|---|---|---|---|
| 1 | B1 | 100% | 1036 | 709 | 142 | - | 0% | - | - | 0% | - | - | Durock | 100 | 3,7 | 140 | 5,2 | A2 | |
| 2 | B1 | 100% | 1036 | 709 | 142 | - | 0% | - | - | 0% | - | - | Durock | 100 | 3,9 | 133 | 5,2 | A2 | |
| 3 | B1 | 100% | 1036 | 709 | 142 | - | 0% | - | - | 0% | - | - | Durock | 100 | 3,9 | 137 | 5,3 | A2 | |
| 4 | B1 | 100% | 462 | 316 | 63 | - | 0% | - | - | 0% | - | - | Durock | 100 | 2,5 | 140 | 3,5 | A2 | |
| 5 | B1 | 100% | 825 | 564 | 113 | - | 0% | - | - | 0% | - | - | DP-GF | 100 | 4,4 | 150 | 6,6 | A2 | |
| 6 | B1 | 100% | 462 | 316 | 63 | - | 0% | - | - | 0% | - | - | Durock | 100 | 3,7 | 155 | 5,8 | A2 | |
| 7 | B1 | 100% | 393 | 269 | 54 | - | 0% | - | - | 0% | - | - | DP-GF | 100 | 4,2 | 153 | 6,4 | A2 | |
| 8 | B1 | 100% | 254 | 174 | 35 | - | 0% | - | - | 0% | - | - | DP-GF | 100 | 3,3 | 148 | 4,9 | A2 | |
| 9 | B1 | 100% | - | - | - | - | 0% | - | - | 0% | - | - | Durock | 100 | 3,6 | 141 | 5,0 | A2 | |
| 10 | B1 | 100% | - | - | - | - | 0% | - | - | 0% | - | - | Durock | 100 | 3,7 | 136 | 5,0 | A2 | |
| 11 | B1 | 100% | - | - | - | - | 0% | - | - | 0% | - | - | DP-GF | 100 | 3,6 | 139 | 5,0 | A2 | |
| 12 | B1 | 100% | - | - | - | - | 0% | - | - | 0% | - | - | A-Tagplade | 100 | 3,7 | 135 | 5,0 | A2 | |
| 13 | B1 | 100% | - | - | - | - | 0% | - | - | 0% | - | - | A-Tagplade | 100 | 4,3 | 129 | 5,5 | A2 | |
| 14 | B1 | 100% | - | - | - | - | 0% | - | - | 0% | - | - | DP-GF | 100 | 3,6 | 153 | 5,6 | A2 | |
| 15 | B1 | 100% | - | - | - | - | 0% | - | - | 0% | - | - | Durock | 100 | 3,7 | 152 | 5,7 | A2 | |
| 16 | B1 | 100% | - | - | - | - | 0% | - | - | 0% | - | - | Durock | 100 | 4,0 | 138 | 5,5 | A2 | |
| 17 | B1 | 100% | - | - | - | - | 0% | - | - | 0% | - | - | DP-GF | 100 | 4,2 | 133 | 5,6 | A2 | |
| 18 | B1 | 100% | - | - | - | - | 0% | - | - | 0% | - | - | A-Tagplade | 100 | 4,2 | 125 | 5,3 | A2 | |
| 19 | B1 | 100% | - | - | - | - | 0% | - | - | 0% | - | - | A-Tagplade | 100 | 5,2 | 137 | 7,2 | A2 | |
| 20 | B1 | 100% | 254 | 174 | 35 | - | 0% | - | - | 0% | - | - | Klemmrock | 180 | 3,6 | 33 | 1,2 | A2 | |
| 21 | B1 | 100% | 1105 | 756 | 189 | - | 0% | - | - | 0% | - | - | DP-GF | 100 | 3,3 | 143 | 4,7 | A2 | |
| 22 | B1/ citric acid + glucose syrup | 58% | 225 | 154 | 56 | Citric Acid | 8% | 35 | 22 | 34% | 128 | 90 | DP-GF | 100 | 3,7 | 149 | 5,6 | A2 | |
| 23 | B1/ citric acid + glucose syrup | 58% | 239 | 164 | 42 | Citric Acid | 8% | 37 | 23 | 34% | 137 | 96 | Durock | 100 | 3,7 | 129 | 4,8 | A2 | |
| 24 | B1/ Sirodex 431 | 58% | 491 | 336 | 103 | - | 0% | - | 0 | 42% | 642 | 242 | A-Tagplade 100mm | 100 | 4,1 | 152 | 6,2 | A1 | |

| | | | | | | | | | | | | | | | | | | | |
|---|---|---|---|---|---|---|---|---|---|---|---|---|---|---|---|---|---|---|---|
| 25 | B1/ citric acid + glucose syrup | 43% | 116 | 79 | 39 | Citric Acid | 11% | 33 | 21 | 46% | 122 | 85 | Durock | 100 | 3,7 | 154 | 5,8 | A1 | |
| 26 | B1/ citric acid + glucose syrup | 43% | 116 | 79 | 39 | Citric Acid | 11% | 33 | 21 | 46% | 122 | 85 | DP-GF | 100 | 2,9 | 153 | 4,4 | A1 | |
| 27 | B1/ Sirodex 431 | 48% | 275 | 188 | 47 | - | 0% | - | 0 | 52% | 447 | 207 | DP-GF | 100 | 3,6 | 148 | 5,3 | A1 | |
| 28 | B1/ Sirodex 431 | 40% | 106 | 73 | 43 | THPA | 7% | - | 13 | 53% | 207 | 96 | DP-GF | 100 | 3.8 | 145 | 5,5 | A1 | |
| 29 | B1/ Sirodex 431 | 43% | 339 | 232 | 57 | - | 0% | - | 0 | 57% | 808 | 304 | DP-GF | 100 | 4,4 | 180 | 7,9 | A1 | |
| 30 | B1/ Sirodex 431 | 43% | 339 | 232 | 57 | - | 0% | - | 0 | 57% | 808 | 304 | DP-GF | 100 | 5,0 | 168 | 8,5 | A1 | |
| 31 | B1/ Sirodex 431 | 43% | 339 | 232 | 57 | - | 0% | - | 0 | 57% | 808 | 304 | A-Tagplade | 100 | 4,5 | 168 | 7,5 | A1 | |
| 32 | B1/ Sirodex 431 | 43% | 339 | 232 | 57 | - | 0% | - | 0 | 57% | 808 | 304 | A-Tagplade | 100 | 4,2 | 164 | 6,9 | A1 | |
| 33 | B1/ Sirodex 431 | 43% | 339 | 232 | 57 | - | 0% | - | 0 | 57% | 808 | 304 | A-Tagplade | 100 | 4,2 | 135 | 5,7 | A1 | |
| 34 | B1/sucrose | 43% | 67 | 46 | 9 | - | 0% | - | - | 57% | 88 | 62 | A-Tagplade 100mm | 100 | - | - | - | A1 | |
| 35 | B1/ Sirodex 431 | 27% | 84 | 57 | 18 | - | 0% | - | 0 | 73% | 418 | 157 | A-Tagplade | 100 | 4,9 | 194 | 9,6 | A1 | X |
| 36 | B1/ glucose syrup | 23% | 92 | 63 | 55 | - | 0% | - | 0 | 77% | 293 | 205 | Durock | 100 | 3,7 | 132 | 4,9 | A1 | X |
| 37 | citric acid + glucose syrup | 0% | 0 | 0 | 65 | Citric Acid | 19% | 92 | 58 | 81 % | 343 | 240 | DP-GF | 100 | 4,4 | 149 | 6,6 | A1 | X |

| | | | | | | | | | | | | | | | | | | | |
|---|---|---|---|---|---|---|---|---|---|---|---|---|---|---|---|---|---|---|---|
| "Glucose syrup" is a high DE glucose syrup of DE >90 from Cargill. "Sirodex 431" is a high DE glucose syrup of DE ca. 95 from Syral. | | | | | | | | | | | | | | | | | | | |

## Claims

1. The use of a binder composition for improving the fire resistance and anti-punk properties in accordance with Class A1 of Standard EN 13501-1 of a bonded mineral fibre product, said binder composition comprising:
(a) a sugar component, and either
(b) a polycarboxylic acid component and an alkanolamine, or
(c) a reaction product of a polycarboxylic acid component and an alkanolamine; or
(d) a combination of (b) and (c),
the binder composition comprising 42 to 72 percent by weight of sugar component (a), based on the total weight (dry matter) of the binder components.

2. The use according to claim 1, wherein the non-cured binder composition comprises a sugar component (a) in an amount within the range of 45 to 70 percent by weight, based on the total weight (dry matter) of the binder components.

3. The use according to claim 1 or 2, wherein the mineral fibre product has a density within the range of from 10 to 250 kg/m³, preferably 20 to 200 kg/m³.

4. The use according to any one of the preceding claims, wherein the sugar component is selected from sucrose and reducing sugars such as hexoses and pentoses, and mixtures thereof.

5. The use according to claim 4, wherein the sugar component is a reducing sugar having a dextrose equivalent (DE) of 40 to 100, preferably 50 to 100, and more preferably 86 to 100, measured according to ISO 5377-1981 (E).

6. The use according to 4 or 5, wherein the sugar component is a reducing sugar selected from high DE glucose syrup and high-fructose syrup and mixtures thereof.

7. The use according to any one of the preceding claims, wherein the polycarboxylic acid component is selected from dicarboxylic, tricarboxylic, tetracarboxylic, pentacarboxylic, and like polycarboxylic acids, and anhydrides, salts and combinations thereof.

8. The use according to claim 7, wherein the polycarboxylic acid component is selected from at least one of tetrahydrophthalic acid, hexahydrophthalic acid, methyltetrahydrophthalic acid, phthalic acid, methylphthalic acid, trimellitic acid, pyromellitic acid and the corresponding anhydrides.

9. The use according to claim 8, wherein the polycarboxylic acid component additionally comprises a polycarboxylic acid selected from adipic acid, aspartic acid, azelaic acid, butane tricarboxylic acid, butan tetracarboxylic acid, citraconic acid, citric acid, fumaric acid, glutaric acid, itaconic acid, maleic acid, malic acid, mesaconic acid, oxalic acid, sebacic acid, succinic acid, tartaric acid and trimesic acid.

10. The use according to any one of the preceding claims, wherein the alkanolamine is selected from monoethanolamine, diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, 3-amino-1,2-propanediol, 2-amino-1,3-propanediol, aminoethylethanolamine and tris-(hydroxymethyl)-aminomethane.

11. The use according to any one of the preceeding claims, wherein the mineral fibre product is a roofing board product having a density within the range of from 80 to 200 kg/m³.

## Patentansprüche

1. Verwendung einer Bindemittelzusammensetzung zur Verbesserung der Feuerbeständigkeit und der Anti-Punk-Eigenschaften gemäß Klasse A1 der Norm EN 13501-1 eines gebundenen Mineralfaserprodukts, wobei die Bindemittelzusammensetzung umfasst:
(a) eine Zuckerkomponente und entweder
(b) eine Polycarbonsäurekomponente und ein Alkanolamin, oder
(c) ein Reaktionsprodukt von einer Polycarbonsäurekomponente und einem Alkanolamin; oder
(d) eine Kombination aus (b) und (c),
wobei die Bindemittelzusammensetzung 42 bis 72 Gewichtsprozent der Zuckerkomponente (a), bezogen auf das Gesamtgewicht (Trockenmasse) der Bindemittelkomponenten, enthält.

2. Verwendung nach Anspruch 1, wobei die nicht gehärtete Bindemittelzusammensetzung eine Zuckerkomponente (a) in einer Menge im Bereich von 45 bis 70 Gewichtsprozent, bezogen auf das Gesamtgewicht (Trockenmasse) der Bindemittelkomponenten, enthält.

3. Verwendung nach Anspruch 1 oder 2, wobei das Mineralfaserprodukt eine Dichte im Bereich von 10 bis 250 kg/m³, bevorzugt 20 bis 200 kg/m³, aufweist.

4. Verwendung nach einem der vorhergehenden Ansprüche, wobei die Zuckerkomponente aus Saccharose und reduzierenden Zuckern, wie z. B. Hexosen und Pentosen, und Mischungen davon ausgewählt ist.

5. Verwendung nach Anspruch 4, wobei die Zuckerkomponente ein reduzierender Zucker mit einem Dextroseäquivalent (DE) von 40 bis 100, bevorzugt 50 bis 100 und bevorzugter 86 bis 100, gemessen nach ISO 5377-1981 (E), ist.

6. Verwendung nach Anspruch 4 oder 5, wobei die Zuckerkomponente ein reduzierender Zucker ist, der aus Glukosesirup mit hohem DE und einem High-Fructosesirup und Mischungen davon ausgewählt ist.

7. Verwendung nach einem der vorhergehenden Ansprüche, wobei die Polycarbonsäurekomponente ausgewählt ist aus Dicarbon-, Tricarbon-, Tetracarbon-, Pentacarbon- und ähnlichen Polycarbonsäuren und Anhydriden, Salzen und Kombinationen davon.

8. Verwendung nach Anspruch 7, wobei die Polycarbonsäurekomponente ausgewählt ist aus mindestens einer von Tetrahydrophthalsäure, Hexahydrophthalsäure, Methyltetrahydrophthalsäure, Phthalsäure, Methylphthalsäure, Trimellithsäure, Pyromellithsäure und den entsprechenden Anhydriden.

9. Verwendung nach Anspruch 8, wobei die Polycarbonsäurekomponente zusätzlich eine Polycarbonsäure umfasst, die ausgewählt ist aus Adipinsäure, Asparaginsäure, Azelainsäure, Butantricarbonsäure, Butantetracarbonsäure, Citraconsäure, Citronensäure, Fumarsäure, Glutarsäure, Itaconsäure, Maleinsäure, Apfelsäure, Mesaconsäure, Oxalsäure, Sebacinsäure, Bernsteinsäure, Weinsäure und Trimesinsäure.

10. Verwendung nach einem der vorhergehenden Ansprüche, wobei das Alkanolamin ausgewählt ist aus Monoethanolamin, Diethanolamin, Triethanolamin, Diisopropanolamin, Triisopropanolamin, Methyldiethanolamin, Ethyldiethanolamin, n-Butyldiethanolamin, Methyldiisopropanolamin, Ethylisopropanolamin, Ethyldiisopropanolamin, 3-Amino-1,2-propandiol, 2-Amino-1,3-propandiol, Aminoethylethanolamin und Tris-(hydroxymethyl)-aminomethan.

11. Verwendung nach einem der vorhergehenden Ansprüche, wobei das Mineralfaserprodukt ein Bedachungsplattenprodukt mit einer Dichte im Bereich von 80 bis 200 kg/m³ ist.

## Revendications

1. Utilisation d'une composition de liant pour améliorer la résistance au feu et les propriétés contre l'auto-échauffement conformément à la classe A1 de la norme EN 13501-1 d'un produit en fibres minérales collées, ladite composition de liant comportant :
(a) un composant sucre, et soit
(b) un composant acide polycarboxylique et une alcanolamine, ou
(c) un produit de réaction d'un composant acide polycarboxylique et d'une alcanolamine ; ou
(d) une combinaison de (b) et (c), la composition de liant comportant 42 à 72 pour cent en poids de composant sucre (a), sur la base du poids total (matière sèche) des composants de liant.

2. Utilisation selon la revendication 1, dans laquelle la composition de liant non durcie comporte un composant sucre (a) en une quantité comprise dans la plage de 45 à 70 % en poids, par rapport au poids total (matière sèche) des composants de liant.

3. Utilisation selon la revendication 1 ou 2, dans laquelle le produit en fibres minérales présente une densité dans la plage de 10 à 250 kg/m³, de préférence de 20 à 200 kg/m³.

4. Utilisation selon l'une quelconque des revendications précédentes, dans laquelle le composant sucre est choisi parmi le saccharose et des sucres réducteurs tels que les hexoses et les pentoses, et leurs mélanges.

5. Utilisation selon la revendication 4, dans laquelle le composant sucre est un sucre réducteur présentant un équivalent en dextrose (DE) de 40 à 100, de préférence de 50 à 100, et de manière davantage préférée de 86 à 100, mesuré selon ISO 5377-1981 (E).

6. Utilisation selon la revendication 4 ou 5, dans laquelle le composant sucre est un sucre réducteur choisi parmi un sirop de glucose à haute teneur en DE et un sirop à haute teneur en fructose et des mélanges de ceux-ci.

7. Utilisation selon l'une quelconque des revendications précédentes, dans laquelle le composant acide polycarboxylique est choisi parmi les acides dicarboxylique, tricarboxylique, tétracarboxylique, pentacarboxylique, et des acides polycarboxyliques similaires, et des anhydrides, des sels et des combinaisons de ceux-ci.

8. Utilisation selon la revendication 7, dans laquelle le composant acide polycarboxylique est choisi parmi au moins l'un parmi l'acide tétrahydrophtalique, l'acide hexahydrophtalique, l'acide méthyltétrahydrophtalique, l'acide phtalique, l'acide méthylphtalique, l'acide trimellitique, l'acide pyromellitique et les anhydrides correspondants.

9. Utilisation selon la revendication 8, dans laquelle le composant acide polycarboxylique comporte en outre un acide polycarboxylique choisi parmi l'acide adipique, l'acide aspartique, l'acide azélaïque, l'acide butanetricarboxylique, l'acide butanetétracarboxylique, l'acide citraconique, l'acide citrique, l'acide fumarique, l'acide glutarique, l'acide itaconique, l'acide maléique, l'acide malique, l'acide mésaconique, l'acide oxalique, l'acide sébacique, l'acide succinique, l'acide tartrique et l'acide trimésique.

10. Utilisation selon l'une quelconque des revendications précédentes, dans laquelle l'alcanolamine est choisie parmi la monoéthanolamine, la diéthanolamine, la triéthanolamine, la diisopropanolamine, la triisopropanolamine, la méthyldiéthanol-amine, l'éthyldiéthanolamine, la n-butyldiéthanolamine, la méthyldiisopropanol-amine, l'éthylisopropanolamine, l'éthyldiisopropanolamine, le 3-amino-1,2-propanediol, le 2-amino-1,3-propanediol, l'aminoéthyléthanolamine et le tris- (hydroxyméthyl)-aminométhane.

11. Utilisation selon l'une quelconque des revendications précédentes, dans laquelle le produit en fibres minérales est un produit de panneau de toiture présentant une densité dans la plage de 80 à 200 kg/m³.
